# EUROPÄISCHE PATENTSCHRIFT

(11) **EP 2 408 167 B1**
(45) Veröffentlichungstag und Bekanntmachung des Hinweises auf die Patenterteilung: **31.08.2016**
(21) Anmeldenummer: 11172808.5
(22) Anmeldetag: 06.07.2011
(51) Int. Cl.: H04L 29/06

(54) **VERFAHREN UND RECHNEREINRICHTUNG ZUM OPTIMIEREN EINER BESTEHENDEN DATENÜBERTRAGUNGSVERBINDUNG**
METHOD AND COMPUTER DEVICE FOR OPTIMISING A DATA TRANSFER CONNECTION
PROCÉDÉ ET DISPOSITIF DE CALCUL DESTINÉ À OPTIMISER UNE CONNECTION DE TRANSFERT DE DONNÉES

(30) Priorität: 12.07.2010 DE 102010026841
(43) Veröffentlichungstag der Anmeldung: 18.01.2012
(73) Patentinhaber: Vodafone GmbH, 40549 Düsseldorf (DE)
(72) Erfinder: Nozulak, Thorsten, 45739 Oer-Erkenschwick (DE)
(74) Vertreter: Müller & Schubert

(56) Entgegenhaltungen:
- WO-A1-02/071709
- WO-A2-01/13277
- WO-A2-2005/107116
- KR-A- 20070 091 889
- US-A1- 2004 045 030
- US-A1- 2004 264 368
- US-A1- 2006 013 192
- MATTHEW BAKER: 'LTE-Advanced Physical Layer', [Online] Nr. REV-090003R1, 17 Dezember 2009, Seiten 1 - 48, XP002637658 IMT-ADVANCED EVALUATION WORKSHOP 17 - 18 DECEMBER, 2009, BEIJING, Gefunden im Internet: <URL:http://www.3gpp.org/ftp/workshop/2009- 12-17_ITU-R_IMT-Adv_eval/docs/pdf/REV-09000 3-r1.pdf> [gefunden am 2011-05-18]

## Beschreibung

Die vorliegende Erfindung betrifft ein Verfahren zum Optimieren einer bestehenden Datenübertragungsverbindung. Weiterhin betrifft die Erfindung auch eine Rechnereinrichtung zum Optimieren einer bestehenden Datenübertragungseinrichtung.

Bei bisher bekannten Lösungen ist vorgesehen, dass eine "statische Optimierung" durchgeführt wird. Der Datenverkehr wird hierzu über eine Servereinrichtung, insbesondere einen Performance Enhancement Server, geführt und optimiert. Jedoch werden diese Optimierungseinstellungen für die gesamte Verbindungsdauer beibehalten. Über einen Client oder eine Client Software kann beispielsweise die Bild-Optimierungsstufe eingestellt werden. Jedoch erfolgt keine automatische Anpassung auf eine sich ändernde maximale Datenübertragungsgeschwindigkeit oder auf weitere Rahmenbedingungen.

Die statische Optimierung ermöglicht es nicht, die Rahmenbedingungen der unterschiedlichen Verbindungsmedien zu berücksichtigen und die jeweils optimale Konfiguration einzustellen, beispielsweise den Komprimierungsgrad Bilder, die TCP/IP-Settings, und dergleichen.

In anderem Zusammenhang sind in der US2006/0291385 A1 ein System sowie ein Verfahren zum automatischen Wechseln von Netzwerkverbindungen in Abhängigkeit der Veränderungen des operativen Umfelds für Computer mit verschiedenen Netzwerkanschlüssen beschrieben. In dem Computer sind verschiedene Möglichkeiten von Netzwerkverbindungen implementiert. Bei der bekannten Lösung wird die aktuelle Netzwerkumgebung durch Verwendung von Verbindungsparametern aktiv ermittelt, wobei die Verbindungsparameter zuvor in einer Netzwerkverbindungsdatenbank gespeichert wurden. Ziel der bekannten Lösung ist es, eine Netzwerkverbindung des Computers erneut herzustellen, nachdem die aktuelle Netzwerkverbindung aufgrund von Veränderungen in der Ablaufsumgebung des Computers unterbrochen wurde. Gemäß der bekannten Lösung wird dazu die am besten geeignete Netzwerkverbindung für die vorliegende Ablaufsumgebung automatisch ausgewählt, so dass der Benutzer nicht mehr manuell die Netzwerkparameter auswählen und einstellen muss. Die bekannte Lösung dient folglich dazu, eine für den Computer geeignete Netzwerkverbindung erneut aufzubauen, nachdem eine zunächst bestehende Netzwerkverbindung unterbrochen wurde.
Nachteilig bei dieser bekannten Lösung ist allerdings, dass auch hier eine Optimierung bestehender Netzwerkverbindungen nicht vorgenommen werden kann. Der vorliegenden Erfindung liegt deshalb die Aufgabe zugrunde, ein Verfahren sowie eine Rechnereinrichtung bereitzustellen, mittels dessen/derer eine bestehende Datenübertragungsverbindung optimiert werden kann.

Die Veröffentlichung durch Matthew Baker: "LTE-Advanced Physical Layer",IMT-ADVANCED EVALUATION WORKSHOP 17 - 18 DECEMBER, 2009, BEIJING" Nr. REV-090003r1 17. Dezember 2009 (2009-12-17), XP002637658, fällt auch in das Gebiet der Verbindungsoptimierung.

Die Erfindung wird durch den unabhängigen Verfahrensanspruch 1 und den korrespondierenden unabhängigen Vorrichtungsanspruch 10 repräsentiert. Weitere vorteilhafte Aspekte sind in den abhängigen Ansprüche 2-9 sowie 11 und 12 ausgeführt.

Weitere Merkmale und Details der Erfindung ergeben sich aus den Unteransprüchen, der Beschreibung sowie den Zeichnungen. Dabei gelten Merkmale und Details, die im Zusammenhang mit dem erfindungsgemäßen Verfahren beschrieben sind, selbstverständlich auch im Zusammenhang mit der erfindungsgemäßen Rechnereinrichtung, und umgekehrt, so dass hinsichtlich der Offenbarung zwischen den beiden Erfindungsaspekten wechselseitig vollinhaltlich aufeinander Bezug genommen und verwiesen wird.

Gemäß dem ersten Aspekt der Erfindung wird ein Verfahren zum Optimieren einer bestehenden Datenübertragungsverbindung bereitgestellt, das dadurch gekennzeichnet ist, dass der Wert wenigstens eines Übertragungsparameters der bestehenden Datenübertragungsverbindung, insbesondere kontinuierlich, ermittelt wird, dass der ermittelte wenigstens eine Übertragungsparameterwert mit Vergleichsdaten verglichen wird, wobei die Vergleichsdaten Übertragungsparameterreferenzwerte aufweisen, die mit Einstelldaten für die Datenübertragungsverbindung verknüpft sind, und dass auf der Basis des Vergleichs Einstellungen der Datenübertragungsverbindung unter Verwendung der mit den Übertragungsparameterreferenzwerten verknüpften Einstelldaten vorgenommen werden.

Erfindungsgemäß ist das Verfahren zum Optimieren einer bestehenden Datenübertragungsverbindung vorgesehen. Dabei ist die Erfindung nicht auf bestimmte Typen von Datenübertragungsverbindungen beschränkt. Beispielsweise kann es sich bei einer Datenübertragungsverbindung um eine mobile Datenübertragungsverbindung, eine Kommunikationsverbindung, eine Netzwerkverbindung oder dergleichen handeln. Weitere vorteilhafte, jedoch nicht ausschließliche Beispiele für Datenübertragungsverbindungen sind im weiteren Verlauf der Beschreibung genannt.

Erfindungsgemäß ist vorgesehen, dass der Wert wenigstens eines Übertragungsparameters der bestehenden Datenübertragungsverbindung ermittelt wird. Diese Ermittlung kann insbesondere kontinuierlich geschehen, was aber nicht zwingend erforderlich ist. Unter einem Wert ist dabei insbesondere eine quantitativ und/oder qualitativ bestimmte Eigenschaft der Übertragungsparameter zu verstehen. Bei dem Übertragungsparameter handelt es sich insbesondere um eine Variable in Bezug auf die Übertragung, beispielsweise in Bezug auf die Übertragungseigenschaften, die beispielsweise geändert werden kann. Dabei ist die vorliegende Erfindung nicht auf bestimmte Typen oder Arten von Übertragungsparametern beschränkt. Einige vorteilhafte, jedoch nicht ausschließliche Beispiele hierzu sind im weiteren Verlauf der Beschreibung erörtert.

Der ermittelte wenigstens eine Übertragungsparameterwert wird mit Vergleichsdaten verglichen. Dies kann beispielsweise in einer dafür vorgesehenen Vergleichseinrichtung erfolgen. Dabei weisen die Vergleichsdaten Übertragungsparameterreferenzwerte auf, die mit Einstelldaten für die Datenübertragungsverbindung verknüpft sind. Die Vergleichsdaten stellen somit insbesondere eine Art Datenpaare dar, wobei jedem Übertragungsparameterreferenzwert jeweils für diesen geeignete Einstelldaten zugeordnet sind. Die Vergleichsdaten können beispielsweise in einer Art Datenbank abgelegt sein, auf die zugegriffen werden kann. Einstelldaten sind insbesondere solche Daten, Informationen und dergleichen, die Einstellungen bezüglich der Datenübertragungsverbindung betreffen, beispielsweise Einstellungen bezüglich der Datenübertragung. Dabei ist die vorliegende Erfindung nicht auf bestimmte Typen oder Arten von Einstelldaten beschränkt. Einige vorteilhafte, jedoch nicht ausschließliche Beispiele hierzu sind im weiteren Verlauf der Beschreibung erörtert.

Die Vergleichdaten können vorteilhaft in einem dem erfindungsgemäßen Verfahren vorgelagerten Schritt erstellt werden, beispielsweise vom Nutzer oder vom Anbieter des Verfahrens.

Auf der Basis des Vergleichs werden Einstellungen der Datenübertragungsverbindung unter Verwendung der mit den Übertragungsparameterreferenzwerten verknüpften Einstelldaten vorgenommen. Auch diesbezüglich ist die vorliegende Erfindung nicht auf bestimmte Ausführungsformen beschränkt. Vorteilhafte, jedoch nicht ausschließliche Beispiele hierzu werden im weiteren Verlauf der Beschreibung näher erläutert.

Die vorliegende Erfindung ist nicht auf bestimmte Ausführungsvarianten beschränkt, wo das Verfahren ablaufen soll, beziehungsweise wo die Optimierung, beispielsweise die Optimierungsänderungen stattfinden sollen. Beispielsweise kann vorgesehen sein, dass die Optimierung in einer Servereinrichtung und/oder in einem Kommunikationsendgerät durchgeführt, beispielsweise getriggert, werden kann. In allen Fällen ist insbesondere eine Kommunikation zwischen den entsprechenden Komponenten notwendig.

Das erfindungsgemäße Verfahren läuft vorteilhaft auf einer Rechnereinrichtung ab. Hierbei kann es sich insbesondere um eine weiter unten näher beschriebene Rechnereinrichtung gemäß dem zweiten Aspekt der Erfindung handeln. Die Erfindung ist nicht auf bestimmte Ausgestaltungen der Rechnereinrichtung beschränkt. Ebenso ist die Erfindung nicht auf bestimmte Implementierungsorte für die Rechnereinrichtung beschränkt. Beispielsweise kann die Rechnereinrichtung in einem dem Nutzer des Verfahrens zugeordneten Kommunikationsendgerät vorgesehen sein. Ebenso kann die Rechnereinrichtung in einer Servereinrichtung vorgesehen sein, die insbesondere Bestandteil eines Netzwerks sein kann. In diesem Fall findet insbesondere ein Datenaustausch zwischen dem Kommunikationsendgerät des Nutzers und der Servereinrichtung statt.

Der Kern des erfindungsgemäßen Verfahrens besteht insbesondere auch darin, bei bestehenden Datenübertragungsverbindungen, insbesondere kontinuierlich, bestimmte jeweils mögliche Übertragungsparameter zu betrachten, um jederzeit die optimalen Übertragungseinstellungen verwenden zu können. Ändern sich während einer bestehenden Datenverbindung die Übertragungsparameter, können auch direkt die Optimierungseinstellungen geändert werden. Grundlage ist insbesondere eine bestehende, das heißt aktive Datenübertragungsverbindung. Es werden die Übertragungsparameter, insbesondere die möglichen Übertragungsparameter betrachtet. Dabei können für die jeweils vorherrschenden Werte der Übertragungsparameter entsprechend geeignete und angepasste Optimierungseinstellungen verwendet werden. Ändert sich der Wert des Übertragungsparameters, werden, insbesondere automatisch, auch die entsprechenden Optimierungseinstellungen geändert.

Dabei weist das erfindungsgemäße Verfahren im Vergleich zu den aus dem Stand der Technik bekannten Lösungen eine Reihe von Vorteilen auf. Beispielsweise können automatisch gemanagte Optimierungseinstellungen erreicht werden.

Weiterhin kann eine Performancesteigerung für den Nutzer erzielt werden, da immer die optimalen Einstellungen verwendet werden. Dies ist insbesondere unter Berücksichtigung verschiedenster Rahmenbedingungen wie Übertragungsgeschwindigkeit, QoS, Bandbreitenbegrenzung, Roamingstatus, und dergleichen möglich. Auch ist eine gemanagte Datenreduzierung, beispielsweise im Ausland, möglich, was eine bessere Ausnutzung der Auslandstarife aus Sicht des Kunden (Inklusivvolumina) oder eine Kostenersparnis für Netzwerkbetreiber durch weniger verbrauchtes Inklusivvolumen bedeutet. Durch die adaptive Optimierung erhöht sich insbesondere auch die Zufriedenheit der Nutzer bezüglich Geschwindigkeit und Bildqualität, was beispielsweise zur Steigerung der Akzeptanz des Optimierungsclients führt.

Vorzugsweise ist vorgesehen, dass bei einer Änderung des ermittelten Werts des wenigstens einen Übertragungsparameters der bestehenden Datenübertragungsverbindung die Einstellungen der Datenübertragungsverbindung geändert werden.

In bevorzugter Ausgestaltung kann vorgesehen sein, dass das Verfahren zum Optimieren einer bestehenden Datenübertragungsverbindung zwischen einem Kommunikationsendgerät und einer Servereinrichtung verwendet wird. Es kann aber auch zum Optimieren von Datenübertragungsverbindungen zwischen Kommunikationsendgeräten eingesetzt werden.

Beispielsweise kann vorgesehen sein, dass der Wert des wenigstens einen Übertragungsparameters vom Kommunikationsendgerät ermittelt und an die Servereinrichtung übertragen wird. Natürlich könnte der Wert des Übertragungsparameters auch in der Servereinrichtung ermittelt werden. Dies ist beispielsweise bei Parameteränderungen auf der "Serverseite", zum Beispiel Throttling-Server, möglich. Die Ermittlung des Werts des Übertragungsparameters kann beispielsweise auch unter Zuhilfenahme weiterer Informationen, beispielsweise von Datenbanken, Netzelementen und dergleichen, erfolgen.

Vorzugsweise wird der Vergleich des ermittelten wenigstens einen Übertragungsparameterwerts mit den Vergleichsdaten in einer Vergleichseinrichtung durchgeführt. Die Vergleichseinrichtung kann beispielsweise Bestandteil der oben beschriebenen Rechnereinrichtung sein.

Wie eingangs bereits geschildert wurde, werden aktuell bei Datenübertragungsverbindungen, beispielsweise im Mobilfunknetz, bereits sogenannte Performance Enhancement Server (PEP) zur Optimierung des Datentraffics eingesetzt. Hier werden Protokolloptimierungen und Parameter-Settings vorgenommen und der zu übertragene Dateninhalt wird teilweise komprimiert. Hierzu können über einen Softwareclient auf Anwenderseite dem PEP einige Einstellungswünsche mitgeteilt werden, beispielsweise die Bildkomprimierungsstufe.

Die Konfiguration der jeweiligen Datenübertragungsverbindung erfolgt aktuell jedoch nur einmalig bei Verbindungsaufbau und insbesondere unabhängig von den jeweiligen Umgebungsbedingungen der Datenübertragungsverbindung, beispielsweise Mobilfunkverbindung, denn hierüber liegen dem PEP keine Informationen vor. Somit erfolgt auch keine Anpassung bei sich wechselnden Umgebungsbedingungen des Nutzers. Dies kann mit dem erfindungsgemäßen Verfahren nunmehr verbessert werden.

In bevorzugter Ausgestaltung des Verfahrens ist vorgesehen, dass der Vergleich des ermittelten wenigstens einen Übertragungsparameterwerts mit den Vergleichsdaten in der Servereinrichtung und/oder in dem Kommunikationsendgerät durchgeführt wird. Der Vergleich muss nicht zwingend in der Servereinrichtung erfolgen. Eine Änderung der Optimierungseigenschaften kann auch auf Endgeräteseite erfolgen, beispielsweise bei Daten-Upload. Somit kann der Vergleich auch im Endgerät erfolgen. Somit können die Vergleichsdaten auch im Endgeräte-Client platziert sein.

Weiterhin können beispielsweise auch die Einstellungen der Datenübertragungsverbindung unter Verwendung der mit den Übertragungsparameterreferenzwerten verknüpften Einstelldaten in der Servereinrichtung vorgenommen werden. Ebenso könnten der Vergleich und die Einstellungen auch in einem Kommunikationsendgerät stattfinden beziehungsweise vorgenommen werden, insbesondere unter den vorstehend genannten Voraussetzungen.

Beispielsweise kann ein Kommunikationsendgerät, beispielsweise ein Client, der Servereinrichtung, beispielsweise dem PEP, Informationen über die Umgebungsvariablen mitteilen, so dass die Servereinrichtung weitergehende Optimierungen vornehmen kann. Beispielsweise kann die Servereinrichtung auch Informationen heranziehen wie beispielsweise den Status der Bandbreitenbegrenzung (Throttling Server).

In weiterer Ausgestaltung des Verfahrens kann vorgesehen sein, dass die in der Servereinrichtung vorgenommenen Einstellungen der Datenübertragungsverbindung vom Kommunikationsendgerät angefordert werden. Beispielsweise kann ein Kommunikationsendgerät, etwa der Client, bei jeder Änderung der Umgebungsbedingungen angepasste Parametereinstellungen bei der Servereinrichtung, beispielsweise dem PEP, anfordern, wie beispielsweise hinsichtlich der Bild- oder Videoqualität oder dergleichen.

Vorzugsweise kann der Wert des wenigstens einen Übertragungsparameters der bestehenden Datenübertragungsverbindung anhand des verwendeten Bearers ermittelt werden. Dies kann beispielsweise anhand der verwendeten Bearer erfolgen, wie beispielsweise GPRS/EDGE/UMTS/HSPDA/LTE. Bei einem Bearer handelt es sich insbesondere um eine Art Trägerdienst. Bearer sind insbesondere verschiedene Übertragungsmöglichkeiten, die ein Netzbetreiber seinen Kunden anbieten kann.

In weiterer Ausgestaltung kann der wenigstens eine Übertragungsparameter der bestehenden Datenübertragungsverbindung die Übertragungsgeschwindigkeit und/oder die Übertragungsqualität und/oder wenigstens eine weitere Rahmenbedingung sein.

Beispielsweise kann vorgesehen sein, dass die Informationen über den Bearer nicht herangezogen wird, sondern beispielsweise nur die tatsächliche Downloadgeschwindigkeit.

Der Kern besteht insbesondere darin, bei bestehenden, insbesondere mobilen Datenübertragungsverbindungen kontinuierlich die jeweils mögliche Übertragungsgeschwindigkeit, beispielsweise anhand der verwendeten Bearer GPRS/EDGE/UMTS/HSDPA/LTE, sowie insbesondere weitere Rahmenbedingungen zu betrachten, um jederzeit die optimalen Übertragungseinstellungen verwenden zu können. Rahmenbedingungen können neben der möglichen Übertragungsgeschwindigkeit zum Beispiel Roamingstatus oder der Bandbreitenbegrenzungsstatus (Throttling Server) sein. Ändern sich während einer bestehenden Datenverbindung diese Rahmenbedingungen, beispielsweise durch einen Bearerwechsel von UMTS auf GSM, werden auch direkt die Optimierungseinstellungen, beispielsweise TCP/IP-Settings, Komprimierungsstufe der Bilder, und dergleichen, geändert.

Beispielsweise kann eine Optimierung der Bildqualität in direkter Abhängigkeit vom verwendeten Bearer vorgenommen werden. Jedoch können auch Qualitätskriterien, wie beispielsweise die tatsächlich mögliche Datenübertragungsgeschwindigkeit, die Zellauslastung in einem Mobilfunknetz, oder dergleichen, berücksichtigt werden. Auch kann eine besonders vorteilhafte Bildkompressionsrate berücksichtig beziehungsweise eingestellt werden. Natürlich sind auch noch weitergehende Optimierungseinstellungen beziehungsweise Parametereinstellungen möglich, wie beispielsweise TCP/IP-Settings.

Durch das erfindungsgemäße Verfahren lassen sich insbesondere unterschiedliche Optimierungseinstellungen für unterschiedliche Datenübertragungsgeschwindigkeiten realisieren. Auch können beispielsweise Datenreduzierungen im Ausland eingestellt werden.

Wenn sich ein Kommunikationsendgerät beispielsweise im Ausland befindet, kann dies anhand der Übertragungsparameter festgestellt werden. Weisen die Parameter beispielsweise einen bestimmten Wert auf, kann eine Datenreduzierung eingestellt werden, beispielsweise um einen festgelegten Prozentsatz, beispielsweise 20%.

Durch das erfindungsgemäße Verfahren wird es insbesondere möglich, eine aktive Datenübertragungsverbindung zu optimieren, und zwar hinsichtlich einer optimalen Beziehung zwischen deren Geschwindigkeit und deren Qualität. Dabei muss nicht unbedingt jeweils die maximale Geschwindigkeit oder die maximale Qualität eingestellt werden.

Dies soll anhand eines Beispiels verdeutlicht werden. Beispielsweise kann vorgesehen sein, dass ein Nutzer mit seinem mobilen Kommunikationsendgerät, beispielsweise einem Mobiltelefon, im Internet surft und sich dabei gleichzeitig durch das Kommunikationsnetzwerk, beispielsweise ein Mobilfunknetzwerk, hindurchbewegt. Dabei ist nicht immer sichergestellt, dass eine 3G-Abdeckung vorliegt. Manchmal kann die Abdeckung heruntergehen auf GSM/GPRS. Wenn der Nutzer dann von 3G auf GSM heruntergeschaltet wird, kann die Servereinrichtung nach wie vor versuchen, den derzeit genutzten Dienst nach den Einstellungen des 3G-Standards zuzustellen. Die vorliegende Erfindung sieht nun vor, dass die Einstellungen gemäß den geänderten Umgebungsbedingungen automatisch geändert beziehungsweise angepasst werden. Dabei wird die bestehende aktive Datenübertragungsverbindung dynamisch kontrolliert und die optimalen Einstellungen gemäß der zur Verfügung stehenden Netzwerkverbindung vorgenommen.

Insbesondere kann die Konfiguration und Einstellung über den nativen Steuerungskanal erfolgen.

Gemäß einem weiteren Aspekt der Erfindung wird eine Rechnereinrichtung zum Optimieren einer bestehenden Datenübertragungsverbindung bereitgestellt, die gekennzeichnet ist durch eine Vorrichtung zum, insbesondere kontinuierlichen, Ermitteln des Wert wenigstens eines Übertragungsparameters der bestehenden Datenübertragungsverbindung, eine Vergleichsvorrichtung zum Vergleichen des ermittelten wenigstens einen Übertragungsparameterwerts mit Vergleichsdaten, wobei die Vergleichsdaten Übertragungsparameterreferenzwerte aufweisen, die mit Einstelldaten für die Datenübertragungsverbindung verknüpft sind, und eine Vorrichtung zum Vornehmen von Einstellungen der Datenübertragungsverbindung unter Verwendung der mit den Übertragungsparameterreferenzwerten verknüpften Einstelldaten auf der Basis des Vergleichs.

Die Rechnereinrichtung kann beispielsweise in einem Kommunikationsendgerät und/oder in einer Servereinrichtung vorgesehen sein.

Insbesondere kann die Rechnereinrichtung Mittel zur Durchführung des wie vorstehend beschriebenen erfindungsgemäßen Verfahrens aufweisen, so dass auf die entsprechenden Ausführungen weiter oben vollinhaltlich Bezug genommen und verwiesen wird.

Die Erfindung wird nun anhand von Ausführungsbeispielen unter Bezugnahme auf die beiliegenden Zeichnungen näher erläutert. Es zeigen
- Figur 1: in schematischer Darstellung den Unterschied zwischen der aus dem Stand der Technik bekannten Lösung und der erfindungsgemäßen Lösung;
- Figur 2: ein aus dem Stand der Technik bekannte Graphical User Interface (GUI) für die Optimierung von Einstellungen; und
- Figur 3: ein erfindungsgemäßes Graphical User Interface (GUI) für die Optimierung von Einstellungen.

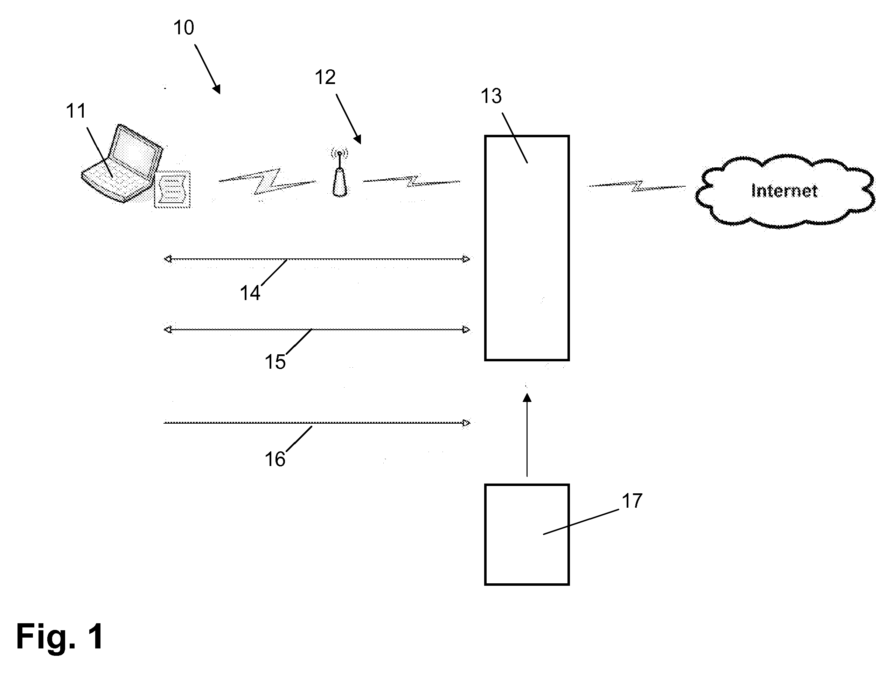

In Figur 1 ist der Unterschied zwischen dem heutigen Stand der Technik und der hier beschriebenen Erfindung dargestellt.

In einem Kommunikationsnetzwerk 10, beispielsweise einem Mobilfunknetzwerk, kommuniziert ein Kommunikationsendgerät 11 über eine Datenübertragungsverbindung 12 über eine Servereinrichtung 13, beispielsweise einen Performance Enhancement Proxy Server (PEP), mit dem Internet.

Aktuell werden bei Datenübertragungsverbindungen 12 im Mobilfunknetzwerk bereits sogenannte Performance Enhancement Server (PEP) 13 zur Optimierung des Datenverkehrs eingesetzt. Hier werden Protokolloptimierungen und Parameter-Settings vorgenommen und der zu übertragene Dateninhalt wird teilweise komprimiert. Hierzu können über einen Softwareclient auf Anwenderseite dem PEP 13 einige Einstellungswünsche mitgeteilt werden, beispielsweise die Bildkomprimierungsstufe.

Die Konfiguration der jeweiligen Datenverbindung erfolgt aktuell jedoch nur einmalig bei Verbindungsaufbau und insbesondere unabhängig von den jeweiligen Umgebungsbedingungen der Mobilfunkverbindung, denn hierüber liegen dem PEP keine Informationen vor. Dies ist durch den Pfeil 14 dargestellt. Somit erfolgt auch keine Anpassung bei sich wechselnden Umgebungsbedingungen des Anwenders.

Wichtige Aspekte der vorliegenden Erfindung sind nun, dass der Client 11 bei jeder Änderung der Umgebungsbedingungen angepasste Parametereinstellungen bei der Servereinrichtung 13, beispielsweise dem PEP anfordert, beispielsweise hinsichtlich der Bild- oder Videoqualität. Dies ist durch Pfeil 15 symbolisiert. Der Client 11 teilt der Servereinrichtung 13 Informationen über die Umgebungsvariablen mit, was durch Pfeil 16 symbolisiert ist, so dass die Servereinrichtung 13 weitergehende Optimierungen vornehmen kann. Bei den aus dem Stand der Technik bekannten Lösungen hat die Servereinrichtung beispielsweise keine Informationen über den verwendeten Bearer. Die Servereinrichtung 13 kann darüber hinaus auch weitergehende Informationen heranziehen wie beispielsweise den Status der Bandbreitenbegrenzung (Throttling Server 17).

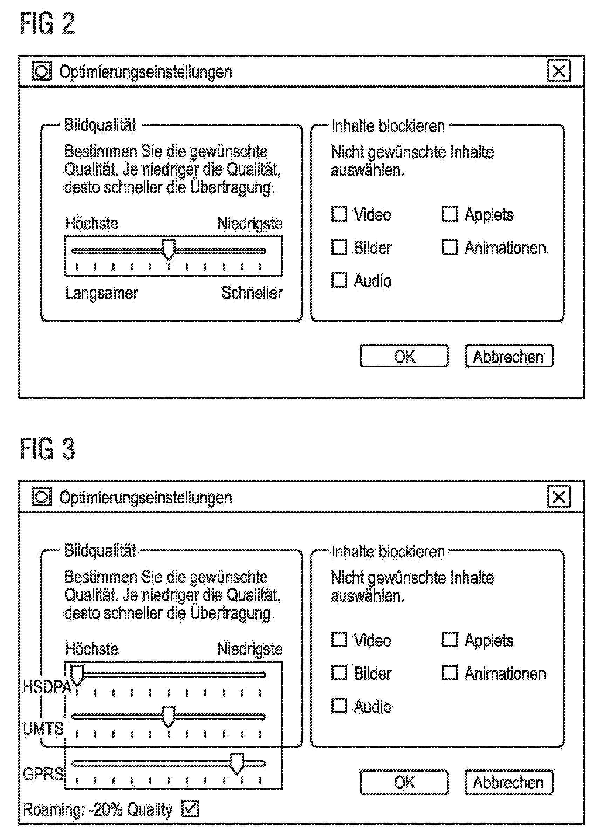

Die Darstellung in Figur 2 zeigt eine aktuelle GUI (Graphical User Interface) zur Ansteuerung des genannten Clients 11 (siehe Figur 1).

Es ist zu erkennen, dass die Einstellungen gleichsam für alle Verbindungstypen gelten. Das heißt, die Bildqualität ist für alle Datenübertragungsgeschwindigkeiten gleich. Dies führt zu folgenden Problemen: Im Falle einer hohen Datenübertragungsgeschwindigkeit wird nicht die optimale Bildqualität angeboten. Im Falle einer niedrigen Datenübertragungsgeschwindigkeit dauert WebSeiten-Aufbau länger, da die Bildqualität nicht weiter reduziert wird. Aufgrund der mittleren Bildqualität als Voreinstellung wird die Optimierung oft vom Nutzer direkt auf die höchste Stufe geändert, was beispielsweise negative Auswirkung auf Netzkapazität hat.

Die Darstellung in Figur 3 zeigt eine erfindungsgemäße GUI (Graphical User Interface) zur Ansteuerung des genannten Clients 11 (siehe Figur 1).

Dabei können unterschiedliche Optimierungseinstellungen für unterschiedliche Datenübertragungsgeschwindigkeiten vorgenommen werden. Es ist ein Managen der Datenreduzierung im Ausland möglich, insbesondere eine bessere Ausnutzung der Auslandstarife aus Sicht des Nutzers (Inklusivvolumina) oder eine Kostenersparnis für den netzbetreiber.

Die in den Figuren 2 und 3 gezeigten Darstellungen beziehen sich nur auf die Optimierung der Bildqualität in direkter Abhängigkeit vom verwendeten Bearer (GSM/UMTS/HSDPA/LTE...).

Jedoch sind auch die folgende Aspekte mit umfasst
1) Umgebungsbedingungen, wie Quality-of-Service-Kriterien wie aktuell mögliche Datenübertragungs-geschwindigkeit oder Zellauslastung, der Status Bandbreitenbegrenzung oder der Roamingstatus.
2) Auswirkung auf Komprimierungsfaktoren (Bild / Video) oder alle Parameter der Datenübertragungsstrecke wie TCP/IP-Settings.

### Bezugszeichenliste

- 10: Kommunikationsnetzwerk (Mobilfunknetzwerk)
- 11: Client (Kommunikationsendgerät)
- 12: Datenübertragungsverbindung
- 13: Servereinrichtung (Performance Enhancement Proxy Server -PEP)
- 14: Client-Server Kommunikation nach Herstellung der Datenübertragungsverbindung
- 15: Abfrage angepasster Parametereinstellungen
- 16: Mitteilung über Umgebungsvariablen
- 17: Throttling Server

## Patentansprüche

1. Verfahren zum Optimieren einer bestehenden Datenübertragungsverbindung (12), wobei der Wert wenigstens eines Übertragungsparameters der bestehenden Datenübertragungsverbindung (12) kontinuierlich ermittelt wird, wobei der Übertragungsparameter eine Variable in Bezug auf die Übertragung ist, die geändert werden kann, und wobei der Wert des Übertragungsparameters eine quantitativ und/oder qualitativ bestimmte Eigenschaft des Übertragungsparameters ist, dass der ermittelte wenigstens eine Übertragungsparameterwert mit Vergleichsdaten verglichen wird, wobei die Vergleichsdaten Übertragungsparameterreferenzwerte aufweisen, die mit Einstelldaten für die Datenübertragungsverbindung (12) verknüpft sind, wobei Einstelldaten solche Daten sind, die Einstellungen bezüglich der Datenübertragungsverbindung betreffen, und wobei Vergleichsdaten Datenpaare darstellen, bei denen jedem Übertragungsparameterreferenzwert jeweils für diesen geeignete Einstelldaten zugeordnet sind, und dass auf der Basis des Vergleichs Einstellungen der Datenübertragungsverbindung (12) unter Verwendung der mit den Übertragungsparameterreferenzwerten verknüpften Einstelldaten vorgenommen werden, derart, dass bei einer Änderung des ermittelten Werts des wenigstens einen Übertragungsparameters der bestehenden Datenübertragungsverbindung (12) die Einstellungen der Datenübertragungsverbindung (12) geändert werden.

2. Verfahren nach Anspruch 1, **dadurch gekennzeichnet, dass** dieses zum Optimieren einer bestehenden Datenübertragungsverbindung (12) zwischen einem Kommunikationsendgerät (11) und einer Servereinrichtung (13) verwendet wird.

3. Verfahren nach Anspruch 2, **dadurch gekennzeichnet, dass** der Wert des wenigstens einen Übertragungsparameters vom Kommunikationsendgerät (11) ermittelt und an die Servereinrichtung (13) übertragen wird, oder dass der Wert des wenigstens einen Übertragungsparameters von der Servereinrichtung (13) ermittelt wird.

4. Verfahren nach einem der Ansprüche 1 bis 3, **dadurch gekennzeichnet, dass** der Vergleich des ermittelten wenigstens einen Übertragungsparameterwerts mit den Vergleichsdaten in einer Vergleichseinrichtung durchgeführt wird.

5. Verfahren nach einem der Ansprüche 2 bis 4, **dadurch gekennzeichnet, dass** der Vergleich des ermittelten wenigstens einen Übertragungsparameterwerts mit den Vergleichsdaten in der Servereinrichtung (13) und/oder im Kommunikationsendgerät (11) durchgeführt wird.

6. Verfahren nach einem der Ansprüche 2 bis 5, **dadurch gekennzeichnet, dass** die Einstellungen der Datenübertragungsverbindung (12) unter Verwendung der mit den Übertragungsparameterreferenzwerten verknüpften Einstelldaten in der Servereinrichtung (13) und/oder im Kommunikationsendgerät (11) vorgenommen werden.

7. Verfahren nach Anspruch 7, **dadurch gekennzeichnet, dass** die in der Servereinrichtung (13) vorgenommenen Einstellungen der Datenübertragungsverbindung (12) vom Kommunikationsendgerät (11) angefordert werden.

8. Verfahren nach einem der Ansprüche 1 bis 7, **dadurch gekennzeichnet, dass** der Wert des wenigstens einen Übertragungsparameters der bestehenden Datenübertragungsverbindung (12) anhand des verwendeten Bearers ermittelt wird.

9. Verfahren nach einem der Ansprüche 1 bis 8, **dadurch gekennzeichnet, dass** der wenigstens eine Übertragungsparameter der bestehenden Datenübertragungsverbindung (12) die Übertragungsgeschwindigkeit und/oder die Übertragungsqualität und/oder wenigstens eine weitere Rahmenbedingung ist.

10. Rechnereinrichtung zum Optimieren einer bestehenden Datenübertragungsverbindung (12), wobei die Rechnereinrichtung die folgenden Vorrichtungen umfasst:
(i) eine Vorrichtung zum kontinuierlichen Ermitteln des Werts wenigstens eines Übertragungsparameters der bestehenden Datenübertragungsverbindung (12), ,-wobei der Übertragungsparameter eine Variable in Bezug auf die Übertragung ist, die geändert werden kann, und wobei der Wert des Übertragungsparameters eine quantitativ und/oder qualitativ bestimmte Eigenschaft des Übertragungsparameters ist,
(ii) eine Vergleichsvorrichtung zum Vergleichen des ermittelten wenigstens einen Übertragungsparameterwerts mit Vergleichsdaten, wobei die Vergleichsdaten Übertragungsparameterreferenzwerte aufweisen, die mit Einstelldaten für die Datenübertragungsverbindung (12) verknüpft sind, wobei Einstelldaten solche Daten sind, die Einstellungen bezüglich der Datenübertragungsverbindung betreffen, und wobei Vergleichsdaten Datenpaare darstellen, bei denen jedem Übertragungsparameterreferenzwert jeweils für diesen geeignete Einstelldaten zugeordnet sind, und
(iii) eine Vorrichtung zum Vornehmen von Einstellungen der Datenübertragungsverbindung (12) unter Verwendung der mit den Übertragungsparameterreferenzwerten verknüpften Einstelldaten auf der Basis des Vergleichs, derart, dass bei einer Änderung des ermittelten Werts des wenigstens einen Übertragungsparameters der bestehenden Datenübertragungsverbindung (12) die Einstellungen der Datenübertragungsverbindung (12) geändert werden.

11. Rechnereinrichtung nach Anspruch 10, **dadurch gekennzeichnet, dass** diese in einem Kommunikationsendgerät (11) und/oder in einer Servereinrichtung (13) vorgesehen ist.

12. Rechnereinrichtung nach Anspruch 10 oder 11, **dadurch gekennzeichnet, dass** diese Mittel zur Durchführung des Verfahrens nach einem der Ansprüche 2 bis 9 aufweist.

## Claims

1. A method for optimizing an existing data transmission link (12), whereby the value of at least on transmission parameter of the existing data transmission link (12) is continuously determined, whereby the transmission parameter is a variable in relation to the transmission, which can be changed, and whereby the value of the transmission parameter is a quantitatively and/or qualitatively determined attribute of the transmission parameter, that the determined at least one transmission parameter value is compared with comparison data, whereby the comparison data comprise transmission-parameter-reference-values, which are associated to adjustment data for the data transmission link (12), whereby said adjustment data are such data, which concern settings with regard to the data transmission link, and whereby comparison data represent data pairs, in which to each transmission-parameter-reference-value adjustment data are associated being suitable for the transmission-parameter-reference-value respectively, and that on the basis of the comparison settings of the data transmission link (12) are performed by using the adjustment data being associated to the transmission-parameter-reference-values, such, that upon a change of the determined value of the at least one transmission parameter of the existing data transmission link (12), the settings of the data transmission link (12) are changed.

2. The method according to claim 1, **characterized in that** this method is used for optimizing an existing data transmission link (12) between a communication end terminal (12) and a server device (13).

3. The method according to claim 2, **characterized in that** the value of the at least one transmission parameter is determined from the communication end terminal (11) and is transmitted to the server device (13), or that the value of the at least one transmission parameter is determined from the server device (13).

4. The method according to anyone of claims 1 to 3, **characterized in that** the comparison of the determined at least one transmission parameter value with the comparison data is performed within a comparison device.

5. The method according to anyone of claims 2 to 4, **characterized in that** the comparison of the determined at least one transmission parameter value with the comparison data is performed within the server device (13) and/or within the communication end terminal (11).

6. The method according to anyone of claims 2 to 5, **characterized in that** the settings of the data transmission link (12) by using the adjustment data being linked to the transmission-parameter-reverence values are performed within said server device (13) and/or within said communication end terminal (11).

7. The method according to claim 6, **characterized in that** the settings of the data transmission link (12) being performed within the server device (13) are requested by the communication end terminal (11).

8. The method according to anyone of claims 1 to 7, **characterized in that** the value of the at least on transmission parameter of the existing data transmission link (12) is determined on the basis of the bearer being used.

9. The method according to anyone of claims 1 to 8, **characterized in that** the at least one transmission parameter of the existing data transmission link (12) is the transmission speed and/or the transmission quality and/or at least one further framework condition.

10. A computer device for optimizing an existing data transmission link (12), whereby the computer device comprises the following appliances:
(i) an appliance for continuously determining the value of at least one transmission parameter of the existing data transmission link (12), whereby the transmission parameter is a variable in relation to the transmission, which can be changed, and whereby the value of the transmission parameter is a quantitatively and/or qualitatively determined attribute of the transmission parameter,
(ii) a comparison appliance for comparing the determined at least one transmission parameter value with comparison data, whereby the comparison data comprise transmission-parameter-reference-values, which are associated to adjustment data for the data transmission link (12), whereby said adjustment data are such data, which concern settings with regard to the data transmission link, and whereby comparison data represent data pairs, in which to each transmission-parameter-reference-value adjustment data are associated being suitable for the transmission-parameter-reference-value respectively, and
(iii) an appliance for performing settings of the data transfer link (12) by using the adjustment data being associated to the transmission-parameter-reference-values on the basis of a comparison, such, that upon a change of the determined value of the at least one transmission parameter of the existing data transmission link (12), the settings of the data transmission link (12) are changed.

11. The computer device according to claim 10, **characterized in that** the computer device is provided within a communication end terminal (11) and/or within a server device (13).

12. The computer device according to claim 10 or 11, **characterized in that** the computer device comprises means or performing the method according to anyone of claims 2 to 9.

## Revendications

1. Procédé servant à optimiser une connexion de transfert de données (12) existante,
sachant que la valeur au moins d'un paramètre de transfert de la connexion de transfert de données (12) existantes est déterminée en continu, sachant que le paramètre de transfert est une variable concernant le transfert qui peut être modifiée et sachant que la valeur du paramètre de transfert est une propriété du paramètre de transfert déterminée de manière quantitative et/ou qualitative et que la valeur de paramètre de transfert déterminée au moins au nombre de une est comparée à des données de comparaison, sachant que les données de comparaison présentent des valeurs de référence de paramètre de transfert, qui sont liées à des données de réglage pour la connexion de transfert de données (12), sachant que des données de réglage sont des données du type qui concernent des réglages concernant la connexion de transfert de données, et sachant que des données de comparaison représentent des paires de données, pour lesquelles des données de réglage adaptées à chaque valeur de référence de paramètre de transfert sont associées à ladite valeur de référence de paramètre de transfert et que, sur la base de la comparaison, des réglages de la connexion de transfert de données (12) sont effectués en utilisant les données de réglage liées aux valeurs de référence de paramètre de transfert de telle manière que dans le cas d'une modification de la valeur déterminée du paramètre de transfert au moins au nombre de un de la connexion de transfert de données (12) existante, les réglages de la connexion de transfert de données (12) sont modifiés.

2. Procédé selon la revendication 1, **caractérisé en ce que** ce dernier est utilisé afin d'optimiser une connexion de transfert de données (12) existante entre un terminal de communication (11) et un système de serveur (13).

3. Procédé selon la revendication 2, **caractérisé en ce que** la valeur du paramètre de transfert au moins au nombre de un est déterminée par le terminal de communication (11) et est transmise au système de serveur (13), ou **en ce que** la valeur du paramètre de transfert au moins au nombre de une est déterminée par le système de serveur (13).

4. Procédé selon l'une quelconque des revendications 1 à 3, **caractérisé en ce que** la comparaison de la valeur de paramètre de transfert déterminée au moins au nombre de une est réalisée avec les données de comparaison dans un système de comparaison.

5. Procédé selon l'une quelconque des revendications 2 à 4, **caractérisé en ce que** la comparaison de la valeur de paramètre de transfert déterminée au moins au nombre de une est réalisée avec les données de comparaison dans le système de serveur (13) et/ou dans le terminal de communication (11).

6. Procédé selon l'une quelconque des revendications 2 à 5, **caractérisé en ce que** les réglages de la connexion de transfert de données (12) sont effectués dans le système de serveur (13) et/ou dans le terminal de communication (11) en utilisant les données de réglage liées aux valeurs de référence de paramètre de transfert.

7. Procédé selon la revendication 6, **caractérisé en ce que** les réglages, effectués dans le système de serveur (13), de la connexion de transfert de données (12) sont demandés par le terminal de communication (11).

8. Procédé selon l'une quelconque des revendications 1 à 7, **caractérisé en ce que** la valeur du paramètre de transfert au moins au nombre de un de la connexion de transfert de données (12) existante est déterminée à l'aide du support utilisé.

9. Procédé selon l'une quelconque des revendications 1 à 8, **caractérisé en ce que** le paramètre de transfert au moins au nombre de un de la connexion de transfert de données (12) existante est la vitesse de transfert et/ou la qualité de transfert et/ou au moins une autre condition marginale.

10. Système de calcul servant à optimiser la connexion de transfert de données (12) existante, sachant que le système de calcul comprend les dispositifs qui suivant :
(i) un dispositif servant
à déterminer en continu la valeur au moins d'un paramètre de transfert de la connexion de transfert de données (12) existante, sachant que
le paramètre de transfert est une variable concernant le transfert, qui peut être modifiée, et sachant que la valeur du paramètre de transfert est une propriété définie de manière quantitative et/ou qualitative du paramètre de transfert,
(ii) un dispositif de comparaison servant
à comparer la valeur de paramètre de transfert déterminée au moins au nombre de une à des données de comparaison, sachant que les données de comparaison présentent des valeurs de référence de paramètre de transfert, qui sont liées à des données de réglage pour la connexion de transfert de données (12), sachant que des données de réglage sont des données du type,
qui concernent des réglages concernant la connexion de transfert de données, et
sachant que des données de comparaison représentent des paires de données, pour lesquelles respectivement des données de réglage adaptées à chaque valeur de référence de paramètre de données sont associées à ladite valeur de référence de paramètre de données, et
(iii) un dispositif servant
à effectuer des réglages de la connexion de transfert de données (12) en utilisant des données de réglage liées aux valeurs de référence de paramètre de données sur la base de la comparaison de telle manière que dans le cas d'une modification de la valeur déterminée du paramètre de transfert au moins au nombre de un de la connexion de transfert de données (12) existante, les réglages de la connexion de transfert de données (12) sont modifiés.

11. Système de calcul selon la revendication 10, **caractérisé en ce que** ce dernier est prévu dans un terminal de communication (11) et/ou dans un système de serveur (13).

12. Système de calcul selon la revendication 10 ou 11, **caractérisé en ce que** ce dernier présente des moyens servant à réaliser le procédé selon l'une quelconque des revendications 2 à 9.
